# EUROPÄISCHE PATENTSCHRIFT

(11) **EP 1 642 771 B1**
(45) Veröffentlichungstag und Bekanntmachung des Hinweises auf die Patenterteilung: **23.11.2011**
(21) Anmeldenummer: 05020460.1
(22) Anmeldetag: 20.09.2005
(51) Int. Cl.: B60R 1/06

(54) **Spiegelträgerplatte**
Mirror support
Support de miroir

(30) Priorität: 22.09.2004 DE 102004045973
(43) Veröffentlichungstag der Anmeldung: 05.04.2006
(73) Patentinhaber: MEKRA Lang GmbH & Co. KG, 90765 Fürth (DE)
(72) Erfinder: Lang, Heinrich, 91465 Ergersheim (DE); Meier, Markus, 91478 Markt Nordheim (DE); Reimchen, Richard, 91522 Ansbach (DE)
(74) Vertreter: Winter, Brandl, Fürniss, Hübner, Röss, Kaiser, Polte - Partnerschaft

(56) Entgegenhaltungen:
- EP-A1- 0 609 508
- EP-A1- 0 799 744
- EP-A2- 1 188 616
- DE-B1- 2 549 555

## Beschreibung

Die vorliegende Erfindung betrifft eine Spiegelträgerplatte nach dem Oberbegriff des Anspruch 1 sowie eine Spiegelanordnung mit einer solchen Spiegelträgerplatte.

Rückspiegel bei Fahrzeugen umfassen allgemein eine Spiegelscheibe, die auf einer Spiegelträgerplatte befestigt ist. Die Spiegelträgerplatte kann ein einfacher Rahmen oder ein Gehäuse sein, in dem die Spiegelscheibe fest oder manuell oder motorisch verstellbar befestigt ist. Diese Spiegelträgerplatte ist an einem Träger befestigt, der seinerseits am Fahrzeug angeordnet ist.

Insbesondere um beschädigte Spiegelscheiben bzw. -trägerplatten auszutauschen, ist es bekannt, eine Spiegelträgerplatte nach dem Oberbegriff des Anspruch 1 mittels lösbarer Klemmschiebeverbindung an dem Träger zu befestigen. Allgemein weist dazu der Träger zwei einander gegenüberliegende plattenförmige Randbereiche auf. Die Spiegelträgerplatte weist an ihrer Rückseite zwei Stege auf, von denen Vorsprünge hin zum anderen Steg hervorragen und so ausgebildet sind, daß die Randbereiche des Trägers zwischen die Rückseite der Spiegelträgerplatte und die Vorsprünge eingeschoben werden kann.

In Einschieberichtung ist am oberen Ende ein starrer Anschlag vorhanden, an dem der eingeschobene Träger formschlüssig anliegt. Die Spiegelträgerplatte wird dann bereits mittels Eigengewicht auf dem Träger gehalten. Bevorzugt ist die oben beschriebene Schiebeverbindung zusätzlich als Klemmschiebeverbindung ausgebildet, bei der die Randbereiche des Trägers reibschlüssig zwischen der Rückseite der Spiegelträgerplatte und den Vorsprüngen fixiert ist. Die EP 0 609 508 B1 offenbart eine solche Spiegelanordnung mit Klemmschiebeverbindung, bei der Vorsprünge und Randbereich komplementär ausgebildet sind, so daß die Spiegelträgerplatte von vorne auf den Träger aufgesteckt und anschließend in Einschieberichtung verschoben werden kann.

Insbesondere aufgrund der im Betrieb auftretenden Vibrationen ist ein bloßer Klemmschluß nachteilig, da die Spiegelträgerplatte sich dabei relativ zum Träger bewegen kann. Im schlimmsten Fall kann die Klemmverbindung versagen. Daher schlägt die EP 0 799 744 B1 einerseits vor, die Stege und die Randbereiche des Trägers keilartig anzuordnen, um so eine Selbstzentrierung unter Eigengewicht zu gewährleisten. Alternativ schlägt die genannte Druckschrift vor, am Träger einen nach oben offenen Aufnahmekanal vorzusehen, in den komplementär ausgebildete Verankerungsstege an der Spiegelträgerplatte eingreifen, wenn der Träger von unten in die Spiegelträgerplatte eingeschoben wird.

Linke und rechte Spiegelträgerplatte sind meist unterschiedlich, jedoch oftmals derart, daß die eine durch Drehung um die Hochachse in die anderen übergeht. Das heißt, die für die rechte Fahrzeugseite vorgesehene Spiegelträgerplatte ist identisch zu derjenigen für die linke Fahrzeugseite, wenn sie um Längs- und Querachse gespiegelt wird. Bei den bekannten Spiegelträgerplatten müssen jedoch aufgrund der oben erläuterten Klemmschiebeverbindung, die nur bezüglich einer Einschieberichtung ausgebildet ist, verschiedene Spiegelträgerplatten für linke und rechte Fahrzeugseite hergestellt und bevorratet werden. Dies ist kostenaufwendig.

Aufgabe der vorliegenden Erfindung ist es daher, eine Spiegelträgerplatte mit Klemmschiebeverbindung zur Verfügung zu stellen, die gleichermaßen als linker und rechter Spiegelträgerplatte verwendbar ist.

Zur Lösung dieser Aufgabe ist eine Spiegelträgerplatte nach dem Oberbegriff des Anspruch 1 durch dessen kennzeichnende Merkmale weitergebildet.

Eine erfindungsgemäße Spiegelträgerplatte ist an einem Träger mittels einer Klemmschiebeverbindung dadurch befestigbar, daß die Spiegelträgerplatte zwei Stege aufweist, die von ihrer Rückseite hervorragen und aus denen je wenigstens ein Vorsprung hin zum anderen Steg derart hervorragt, daß zwischen der Rückseite und dem Vorsprung ein Randbereich des Trägers einschiebbar ist.

Erfindungsgemäß weist die Spiegelträgerplatte ein erstes Federelement und ein zweites Federelement auf, wobei die Federelemente derart ausgebildet sind, daß der Träger beim Einschieben ein unteres von dem ersten und zweiten Federelement elastisch hin zur Rückseite der Spiegelträgerplatte verformt und in formschlüssigen Anschlag mit einem oberen von dem ersten und zweiten Federelement kommt. Die Begriffe "oben" bzw. "unten" beziehen sich dabei auf die Einschubrichtung.

In dieser Klemmschiebeverbindung kann der Träger gleichermaßen von der einen oder der anderen Seite in Richtung der beiden Stege eingeschoben werden. Je nach Einschubrichtung dient das eine Federelement, welches in Einschubrichtung oben liegt, als Anschlag zur Begrenzung der Einschubbewegung, i.e. der Träger stützt sich an diesem oberen Federelement ab. Das andere Federelement, welches in Einschubrichtung unten liegt, wird durch den Träger beim Einschieben elastisch deformiert. Bei vollständig eingeschobenem Träger kann das untere Federelement vorteilhaft in seine Ausgangsstellung zurückschnappen und so den Träger formschlüssig in Einschieberichtung fixieren. In einer alternativen Ausführung bleibt das untere Federelement auch bei vollständig eingeschobenem Träger elastisch deformiert, so daß es eine Federkraft auf den Träger ausübt, die einem Herausgleiten des Trägers entgegenwirkt. Gleichermaßen wird vorteilhaft der Träger gegen die Vorsprünge gedrückt und so der Reibschluß der Klemmverbindung erhöht. In jedem Fall wird eine Relativbewegung der Spiegelträgerplatte auf dem Träger aufgrund von Vibrationen vorteilhaft reduziert.

Das erste und das zweite Federelement dient also wechselseitig je nach Einschubrichtung einmal als oberer Anschlag entgegen der Einschubrichtung und das andere Mal als unteres Kraftmittel, welches einer Herausbewegung des Trägers entgegen der Einschubrichtung entgegenwirkt. Hierdurch ist es vorteilhaft möglich, nur eine Spiegelträgerplatte für die linke und die rechte Fahrzeugseite vorzusehen. Je nach Fahrzeugseite wird die Spiegelträgerplatte um ihre Hochachse um 180° gedreht und am Träger befestigt, was erfindungsgemäß dadurch möglich ist, daß beide Federelemente jeweils gleichermaßen als oberer Anschlag und unteres Kraftmittel fungieren können. Dies wird dadurch erreicht, daß beide Federelemente elastisch deformierbar sind, so daß das jeweils untere bei Einschub des Trägers ausweichen kann.

Bevorzugt sind die Spiegelträgerplatte und/oder die Federelemente aus Kunststoff, was die Herstellung verbilligt und insbesondere Federelemente mit gewünschter Deformationscharakteristik, i.e. Federhärte und dergleichen, ergibt. Vorteilhaft können Spiegelträgerplatte und Federelemente einstückig ausgebildet sein und damit in einem einzigen Urformvorgang hergestellt werden.

In einer vorteilhaften Ausführung ragen von wenigstens einem Steg mehrere Vorsprünge hervor. Hierzu kann der Träger einen komplementär ausgebildeten Randbereich aufweisen, wie dies in der EP 0 609 508 B1 beschrieben ist. Die dort beschriebene Klemmschiebevorrichtung wird insofern vollinhaltlich in die vorliegende Anmeldung aufgenommen.

In einer besonders bevorzugten Ausführung der vorliegenden Erfindung weisen die Federelemente auf ihrer der Rückseite der Spiegelträgerplatte abgewandten Seite einen Vorsprung derart auf, daß der Vorsprung des unteren Federelementes bei eingeschobenem Träger diesen hintergreift. Vorteilhafterweise ist das untere Federelement auch bei vollständig eingeschobenem Träger noch elastisch deformiert, so daß einerseits eine Federkraft einer Herausbewegung des Trägers entgegenwirkt und diesen gegen die Vorsprünge an den Stegen preßt, und andererseits die Klemmschiebeverbindung unter weiterer elastischer Deformation des unteren Federelements auch leicht wieder lösbar ist. Der Vorsprung auf dem Federelement stützt durch das Hintergreifen des Trägers diesen darüberhinaus formschlüssig gegen ein Herausgleiten ab. Bevorzugt ist dabei der Vorsprung so ausgebildet, daß bei einer Relativbewegung des Trägers entgegen der Einschubrichtung dieser eine Kraft so auf das untere Federelement ausübt, daß dieses weiter elastisch verformt wird und so ein Herausgleiten des Trägers ermöglicht. Auf diese Weise kann zum Austausch die Spiegelträgerplatte einfach vom Träger nach oben abgezogen werden.

Vorteilhafterweise umfaßt das erste und/oder zweite Federelement mehrere Federelemente, so daß eine Verdrehung des eingeschobenen Trägers um die Hochachse verhindert wird.

Weitere Aufgaben, Merkmale und Vorteile ergeben sich aus den Unteransprüchen und den nachfolgend beschriebenen Ausführungsformen. Hierzu zeigt:
Fig. 1 eine Draufsicht auf die Rückseite einer Spiegelträgerplatte nach einer Ausführung der vorliegenden Erfindung;
Fig. 2 einen Schnitt der Spiegelträgerplatte längs der Linie C-C in Fig. 1;

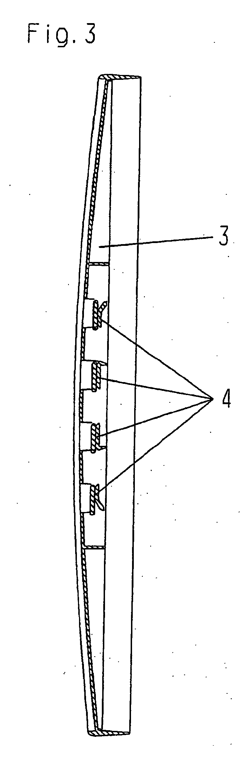

Fig. 3 einen Schnitt der Spiegelträgerplatte längs der Linie A-A in Fig. 1;

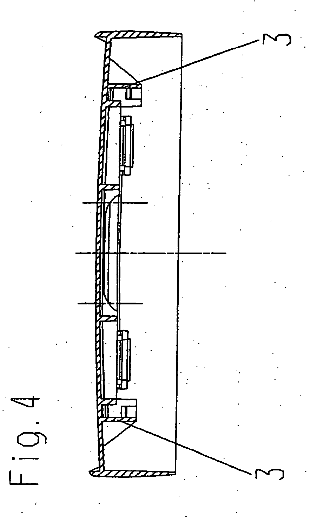

Fig. 4 einen Schnitt der Spiegelträgerplatte längs der Linie B-B in Fig. 1; und
Fig. 5 den Schnitt nach Fig. 2 mit eingeschobenem Träger.

Die Spiegelträgerplatte 1 nach einer Ausführung der vorliegenden Erfindung, die in den Figuren dargestellt ist, umfaßt zwei im wesentlichen parallele Stege 3, von denen je vier Vorsprünge 4 zum gegenüberliegenden Steg hin hervorragen.

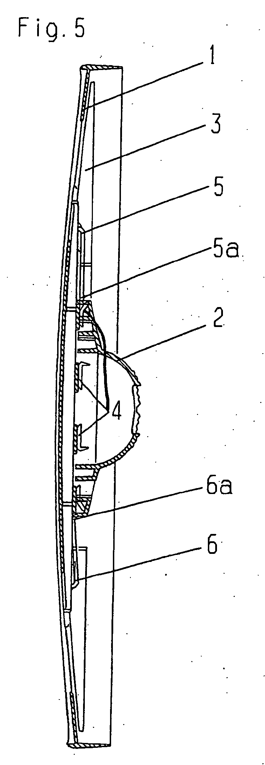

Wie in Fig. 5 dargestellt, kann ein Träger 2 mit seinen Randbereichen zwischen die Rückseite der Spiegelträgerplatte und die Vorsprünge 4 eingeschoben werden und wird dort reibschlüssig gehalten.

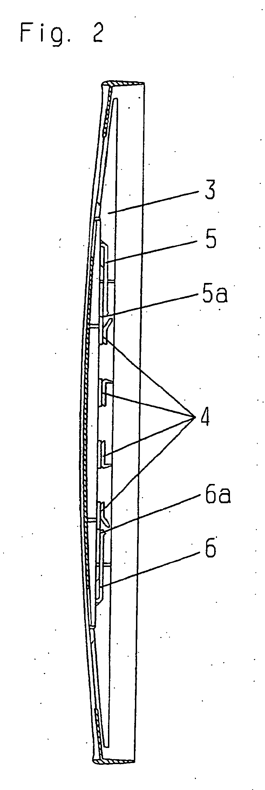

Die Spiegelträgerplatte umfaßt weiter zwei erste Federelemente 5, die intergral mit der Spiegelträgerplatte aus Kunststoff ausgebildet sind und sich zungenförmig in Richtung der Stege erstrecken. Auf der der Rückseite der Spiegelträgerplatte abgewandten Seite der Federelemente (rechts in Fign. 2, 5) weisen sie Vorsprünge 5a auf.

Die Spiegelträgerplatte umfaßt weiter zwei zweite Federelemente 6, die bezüglich der Querachse des Spiegelträgers (in Fign.von links nach rechts) symmetrisch zu den ersten Federelementen 5 ausgebildet sind.

Der Träger 2 kann nun von beiden Querseiten (oben bzw. unten in den Fign.) der Spiegelträgerplatte zwischen die Rückseite der Spiegelträgerplatte und die Vorsprünge 4 eingeschoben werden.

Wird er von der in den Fign. unteren Seite eingeschoben, so deformiert er dabei die zweiten, dabei als untere Federelemente wirkende, Federelemente 6. Sobald er vollständig eingeschoben ist, liegt er an den ersten Federelementen 5 formschlüssig an. Diese wirken dabei als oberer Anschlag in Einschubrichtung, ohne deformiert zu werden. Die unteren Federelemente 6 können bei vollständig eingeschobenem Träger 2 ein wenig zurückfedern, wobei die Vorsprünge 6a den unteren Randbereich des Trägers 2 hintergreifen. Somit wird der Träger 2 an einem Herausgleiten gehindert und zugleich gegen die Vorsprünge 4 der Stege 3 gedrückt, was den Reibschluß erhöht. Zum Lösen der Klemmschiebeverbindung wird die Spiegelträgerplatte nach oben vom Träger abgezogen. Dieser übt dabei aufgrund der Geometrie der Vorsprünge 6a eine Kraft auf die unteren Federelemente 6 aus, so daß diese weiter elastisch hin zur Rückseite der Spiegelträgerplatte deformiert werden und so den Träger 2 freigeben.

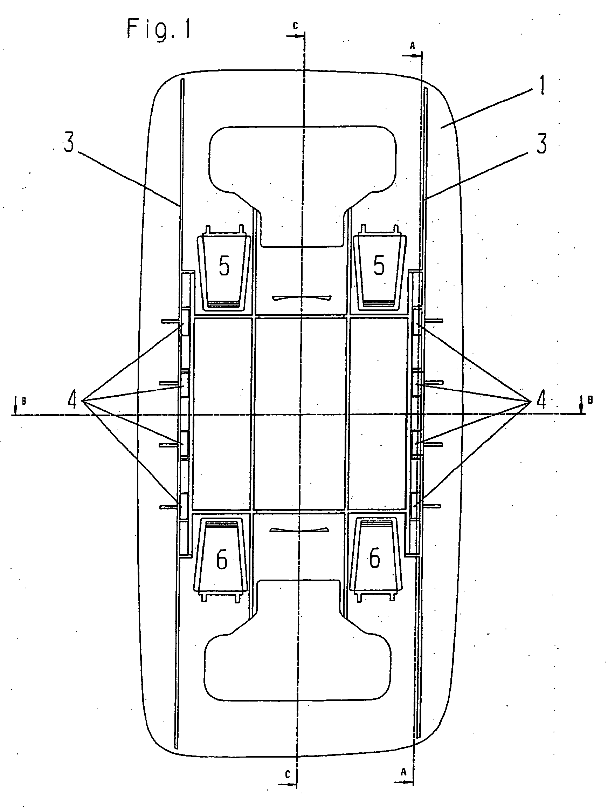

Soll die Spiegelträgerplatte auf der anderen Fahrzeugseite verwendet werden, wird sie um ihre Hochachse (senkrecht zur Ebene der Fig. 1) gedreht und derselbe Träger eingeschoben. Dabei vertauschen sich die Funktionen der ersten und zweiten Federelemente 5 bzw. 6, i.e. die ersten Federelemente 5 fungieren als untere Federelemente, die beim Einschub elastisch deformiert werden. Die zweiten Federelemente 6 stellen den oberen Anschlag dar, an dem der Träger formschlüssig anliegt.

Dadurch, daß sowohl die ersten als auch die zweiten Federelemente elastisch deformierbar sind, können sie als untere Federelemente bei einer Einschubbewegung des Trägers ausweichen. Mithin weist eine erfindungsgemäße Spiegelträgerplatte zwei einander gegenüberliegende mögliche obere Anschläge auf, an denen der eingeschobene Träger je nach Einschubrichtung anliegt, wobei jeder Anschlag elastisch ausweichen kann, wenn der Träger von seiner Seite aus eingeschoben wird.

## Patentansprüche

1. Spiegelträgerplatte (1), insbesondere für Nutzfahrzeuge, die an einem Träger (2) mittels einer Klemmschiebeverbindung befestigbar ist, wobei
die Spiegelträgerplatte zwei Stege (3) aufweist, die von ihrer Rückseite hervorragen und aus denen je wenigstens ein Vorsprung (4) hin zum anderen Steg derart hervorragt, daß zwischen der Rückseite und dem Vorsprung ein Randbereich des Trägers einschiebbar ist,
**dadurch gekennzeichnet, daß** die Spiegelträgerplatte ein erstes Federelement (5) und ein zweites Federelement (6) aufweist,
wobei die Federelemente derart ausgebildet sind, daß der Träger beim Einschieben ein unteres (6) von dem ersten und zweiten Federelement elastisch hin zur Rückseite der Spiegelträgerplatte verformt und in formschlüssigen Anschlag mit einem oberen (5) von dem ersten und zweiten Federelement kommt.

2. Spiegelträgerplatte nach Anspruch 1, **dadurch gekennzeichnet, daß** die Spiegelträgerplatte und/oder die Federelemente aus Kunststoff sind.

3. Spiegelträgerplatte nach Anspruch 2, **dadurch gekennzeichnet, daß** Spiegelträgerplatte und Federelemente einstückig ausgebildet sind.

4. Spiegelträgerplatte nach einem der vorhergehenden Ansprüche, **dadurch gekennzeichnet, daß** von wenigstens einem Steg mehrere Vorsprünge hervorragen.

5. Spiegelträgerplatte nach einem der vorhergehenden Ansprüche, **dadurch gekennzeichnet, daß** die Federelemente identisch ausgebildet sind.

6. Spiegelträgerplatte nach einem der vorhergehenden Ansprüche, **dadurch gekennzeichnet, daß** die Federelemente zungenförmig ausgebildet sind.

7. Spiegelträgerplatte nach einem der vorhergehenden Ansprüche, **dadurch gekennzeichnet, daß** die Federelemente auf ihrer der Rückseite der Spiegelträgerplatte abgewandten Seite einen Vorsprung (5a, 6a) derart aufweisen, daß der Vorsprung (6a) des unteren Federelementes bei eingeschobenem Träger diesen hintergreift.

8. Spiegelträgerplatte nach einem der vorhergehenden Ansprüche, **dadurch gekennzeichnet, daß** das erste und/oder zweite Federelement mehrere Federelemente umfaßt.

9. Spiegelträgerplatte nach einem der vorhergehenden Ansprüche, **dadurch gekennzeichnet, daß** der Randbereich des Trägers zwischen der Rückseite und dem Vorsprung Spiegelträgerplatte reibschlüssig einschiebbar ist.

10. Spiegelträgerplatte nach einem der vorhergehenden Ansprüche, **dadurch gekennzeichnet, daß** der Träger im wesentlichen parallel zur Ebene der Spiegelträgerplatte einschiebbar ist.

11. Spiegelanordnung, insbesondere für Nutzfahrzeuge, die eine Spiegelträgerplatte nach einem der vorhergehenden Ansprüche und eine mit dieser mittels Klemmschiebeverbindung verbindbaren Träger aufweist.

## Claims

1. Mirror support plate (1), in particular for utility vehicles, which can be secured onto a support (2) by means of a clamping and sliding connection, wherein
the mirror support plate comprises two webs (3) which protrude from its rear side, and from which respectively at least one projection (4) projects towards the other web such that between the rear side and the projection an edge area of the support can be inserted,
**characterised in that** the mirror support plate comprises a first spring element (5) and a second spring element (6),
wherein the spring elements are designed such that the support, on inserting a lower (6) of the first and second spring elements, deforms elastically towards the rear side of mirror support plate and comes to a form-locking stop with an upper (5) of the first and second spring elements.

2. Mirror support plate according to claim 1, **characterised in that** the mirror support plate and/or the spring elements are made of plastic.

3. Mirror support plate according to claim 2, **characterised in that** the mirror support plate and spring elements are designed in one piece.

4. Mirror support plate according to one of the preceding claims, **characterised in that** several projections protrude from at least one web.

5. Mirror support plate according to one of the preceding claims, **characterised in that** the spring elements are designed to be identical.

6. Mirror support plate according to one of the preceding claims, **characterised in that** the spring elements are designed to be in the form of tongues.

7. Mirror support plate according to one of the preceding claims, **characterised in that** the spring elements on their side facing away from the rear side of the mirror support plate comprise a projection (5a, 6a) such that the projection (6a) of the lower spring element with an inserted support undergrips the latter.

8. Mirror support plate according to one of the preceding claims, **characterised in that** the first and/or second spring element comprises several spring elements.

9. Mirror support plate according to one of the preceding claims, **characterised in that** the edge area of the support can be inserted by friction contact between the rear side and the projection mirror support plate.

10. Mirror support plate according to one of the preceding claims, **characterised in that** the support can be inserted essentially parallel to the plane of the mirror support plate.

11. Mirror arrangement, in particular for utility vehicles, which comprises a mirror support plate according to one of the preceding claims and a support which can be connected with the latter by means of a clamping and sliding connection.

## Revendications

1. Plaque support de miroir (1), en particulier pour des véhicules utilitaires, susceptible d'être fixée sur un support (2) au moyen d'une liaison coulissante à serrage, où
la plaque support de miroir présente deux nervures (3), faisant saillie de sa face arrière et de chacune desquelles au moins une saillie (4) fait saillie vers l'autre nervure, de manière qu'une zone de bordure du support soit susceptible d'être insérée entre la face arrière et la saillie,
**caractérisé en ce que** la plaque support de miroir présente
une premier élément élastique (5) et un deuxième élément élastique (6),
les éléments élastiques étant réalisés de manière que le support, lors de l'insertion déforme élastiquement un élément élastique inférieur (6), parmi le premier et le deuxième élément élastique, jusqu'à la face arrière de la plaque support de miroir, et vienne en butée, avec liaison à ajustement de forme, avec un élément élastique supérieur (5), parmi le premier et le deuxième élément élastique.

2. Plaque support de miroir selon la revendication 1, **caractérisée en ce que** la plaque support de miroir et/ou les éléments élastiques sont réalisés en matière synthétique.

3. Plaque support de miroir selon la revendication 2, **caractérisée en ce que** la plaque support de miroir et/ou les éléments élastiques sont réalisés d'une seule pièce.

4. Plaque support de miroir selon l'une des revendications précédentes, **caractérisée en ce que** plusieurs saillies font saillie d'au moins une nervure.

5. Plaque support de miroir selon l'une des revendications précédentes, **caractérisée en ce que** les éléments élastiques sont réalisés à l'identique.

6. Plaque support de miroir selon l'une des revendications précédentes, **caractérisée en ce que** les éléments élastiques sont réalisés en forme de languette.

7. Plaque support de miroir selon l'une des revendications précédentes, **caractérisée en ce que**, sur leur face, opposée à la face arrière de la plaque support de miroir, les éléments élastiques présentent une saillie (5a, 6a), de manière que la saillie (6a) de l'élément élastique inférieur saisisse par l'arrière le support, lorsque celui-ci est inséré.

8. Plaque support de miroir selon l'une des revendications précédentes, **caractérisée en ce que** le premier et/ou le deuxième élément élastique comprend/comprennent plusieurs éléments élastiques.

9. Plaque support de miroir selon l'une des revendications précédentes, **caractérisée en ce que** la zone de bordure du support est susceptible d'être insérée, avec liaison par friction, entre la face arrière et la saillie de la plaque support de miroir.

10. Plaque support de miroir selon l'une des revendications précédentes, **caractérisée en ce que** le support est susceptible d'être inséré sensiblement parallèlement au plan de la plaque support de miroir.

11. Agencement à miroir, en particulier pour véhicules utilitaires, présentant une plaque support de miroir, selon l'une des revendications précédentes, et un support susceptible d'être relié à celle-ci au moyen d'une liaison coulissante à serrage.
